# EUROPEAN PATENT SPECIFICATION

(11) **EP 1 427 954 B1**
(45) Date of publication and mention of the grant of the patent: **09.07.2008**
(21) Application number: 02773083.7
(22) Date of filing: 20.09.2002
(51) Int. Cl.: F16J 15/42

(54) **A DEVICE FOR SEALING A PASSAGE THROUGH A WALL**
VORRICHTUNG ZUM ABDICHTEN EINES DURCHGANGS DURCH EINE WAND
DISPOSITIF DESTINE A L'ETANCHEIFICATION D'UN PASSAGE TRAVERSANT UNE PAROI

(30) Priority: 20.09.2001 SE 0103136
(43) Date of publication of application: 16.06.2004
(73) Proprietor: Roplan Development Center AB, 147 39 Tumba (SE)
(72) Inventor: ANDERSSON, Per-Olof, S-137 57 Västerhaninge (SE)
(74) Representative: Berglund, Stefan
(86) International application number: PCT/SE2002/001708
(87) International publication number: WO 2003/025438

(56) References cited:
- GB-A- 2 125 118
- US-A- 3 455 561
- US-A- 3 853 327
- US-A- 5 088 742
- US-A- 6 164 658

## Description

### THE BACKGROUND OF THE INVENTION AND PRIOR ART

The present invention refers to a device according to the preamble of claim 1, see US-A-3,455,561, and a method according to the preamble of claim 22. The invention is particularly suitable for sealing between a substantially stationary wall and a rotating shaft extending through a passage in the wall. Examples of application areas are ships and a propeller shaft extending through the hull of the ship. Also other application areas are possible.

DE-A-1955016 discloses such a device for sealing a passage through a wall between a first space, which is arranged to contain a gas, and a second space, which is arranged to contain a gas, and a second space, which is arranged to contain a liquid. A rotating turbine shaft extends in the passage through the wall and is journalled in a shaft bearing having a gap extending around the shaft between the shaft and the wall. A rotating disc is rigidly arranged on the shaft and extends outwardly from the shaft. A stationary wall in the form of a further disc is provided between the shaft bearing and the rotating disc. The stationary disc is designed in such a way that it forms a space between the two discs. Furthermore, supply conduits are provided for the supply of liquid to this space via two nozzles. The liquid forms a rotating liquid ring in the space.

DE 4212169 discloses a labyrinth sealing having a channel between a rotating part and a stationary disc. The channel may be supplied with oil via a supply channel, wherein a liquid level will be formed in the channel due to the rotation of the disc.

GB 1284596 also discloses a labyrinth sealing with feeding of liquid into a space formed by flange members from a rotating rotor. A stationary disc extends into the space and includes channels for said feeding of liquid and for discharging liquid from the space.

US-A-3,455,561 discloses a centrifugal liquid seal between a rotating shaft and a stationary wall. The sealing device is not intended for sealing a gap between a first space containing a gas and a second space containg a liquid. One embodiment refers to a sealing device comprising a chamber which is open radially inwardly and which can be rotated by means of a mechanism so that liquid present in the chamber will rotate. The walls of the chamber may be roughened.

GB-A-2125118 discloses a hydraulic sealing devices for a gas turbine intended for sealing a gap between an outer shaft and an inner, which are rotating in opposite directions. Blades are provided on a wall of the outer shaft and function as a pump for forcing liquid radially outwardly, wherein liquid possibly could be collected in a recess and together with a vane form a hydraulic seal.

### SUMMARY OF THE INVENTION

The object of the present invention is to provide a device enabling a sufficient sealing of a passage for a rotating shaft.

This object is achieved by the device initially defined, which is characterised by the features of the characterising part of claim 1.

By such means it is possible to ensure in an efficient manner that substantially no liquid will be transported from the second space to the first gas-filled space. The liquid, which rotates at the rotary speed which is higher than the speed of the shaft, forms a liquid body in a radially outer part of the chamber. This liquid body prevents substantially all media transport through the passage, In relation to mechanical sealings the advantage of a low friction and substantially no wear of essential sealing components is of course also achieved. Advantageously, the wall is stationary and consists, for instance, of a wall element of a ship or a stationary plant.

Since the chamber is arranged to permit that a part of said liquid flows into the chamber and to be at least partly retained in the chamber for said sealing of the passage, the liquid proper to be seated off will form a sealing liquid body which prevents said media transport through the passage.

According to a further embodiment of the invention, said means are arranged to provide said rotation in the chamber between the disc and the first space. Consequently, the rotating liquid body is formed in an outer part of the chamber between the disc and the first space. The disc will thus prevent liquid from flowing straight forward from the second space to the first space. The liquid will instead be forced to the radially outer part of the chamber, i.e. to the blocking liquid body.

According to a further embodiment of the invention, said means include a blade member arranged to rotate independently of the shaft. By such a blade member the desired rotation may be achieved in an efficient manner. Advantageously, said means include a drive member, which is arranged to rotate the blade member at a rotary speed which is higher than the rotary speed of the shaft. The blade member may be rotatably carried by a bearing member which is connected to at least one of the shaft, the disc and the wall.

According to a further embodiment of the invention, the blade member includes at least one set of blades which are arranged in the chamber. Advantageously, the blade member may include a rotor member which extends outwardly in the chamber. The rotor member may include one or two such sets of blades. One such rotor member may be annular and extend around the shaft, wherein the blades are arranged on the rotor member and uniformly distributed around the shaft.

According to a further embodiment of the invention, the blade member includes a first set of blades, which are arranged on the rotor member and turned towards the first space, and a second set of blades, which are arranged on the rotor member and turned towards the disc.

According to a further embodiment of the invention, the rotor member includes a rotor of an electric motor having a stator which is provided outside the chamber. The stator and the electric connections may thus be located outside the chamber and in the first space.

According to a further embodiment of the invention, the blade member forms the chamber. The blade member may then advantageously include a first set of blades, which are arranged on a first limiting wall of the chamber and turned towards the disc, and a second set of blades, which are arranged on a second limiting wall of the chamber and turned towards the first limiting wall.

According to a further embodiment of the invention, said means are arranged to supply liquid to the chamber at such a speed and direction that the liquid in the chamber is forced to said rotation. Such means may include at least one nozzle for said liquid supply, wherein said nozzle extends in a substantially tangential direction into the chamber, and a pump for providing said liquid supply.

According to a further embodiment of the invention, the chamber includes several part chambers, which are arranged between the gap and the first space, and extend around the shaft, and two rotatable discs, which are rigidly connected to the shaft and extend outwardly from the shaft in a respective one of said part chambers, wherein each of said part chambers is arranged to contain liquid. Advantageously, said part chambers may be arranged to permit a part of said liquid to flow into the part chambers and at least partly be retained for sealing of the passage.

According to a further embodiment of the invention, the device is arranged to permit liquid to flow from the chamber to the second space. In such a way it is ensured that liquid not may flow from the chamber into the first space. The device may then include a wall portion, which partly defines the chamber and extends outwardly from the gap. The chamber may, between the disc and the wall portion, form an outlet channel, which is arranged to reduce the speed of the liquid flowing from the chamber to the second space. In such a way it is possible to regain pressure and thus reduce the energy consumption of the device. The outlet channel may extend from a radially outer position at the periphery of the disc to a radially inner position in the proximity of the shaft. In order to further increase the pressure recovering, guide vanes may be arranged in the outlet channel for conveying the liquid flowing from the chamber to the second space. Advantageously, said guide vanes are arranged on the wall portion.

The object is also achieved by the method defined in the independent claim 24.

### BRIEF DESCRIPTION OF THE DRAWINGS

The present invention is not to be explained more closely through a description of various embodiments, shown by way of example, and with reference to the drawings attached hereto.

Fig 1 discloses a device according to a first embodiment of the invention.
Fig 2 discloses a device according to a second embodiment of the invention.
Fig 3 discloses a device according to a third embodiment of the invention.
Fig 4 discloses a set of blades of the device in Fig 3.
Fig 5 discloses a device according to a fourth embodiment of the invention.
Fig 6 discloses a set of guide vanes of the device in Fig 5.
Fig 7 discloses a device according to a fifth embodiment of the invention.

### DETAILED DESCRIPTION OF VARIOUS EMBODIMENTS OF THE INVENTION

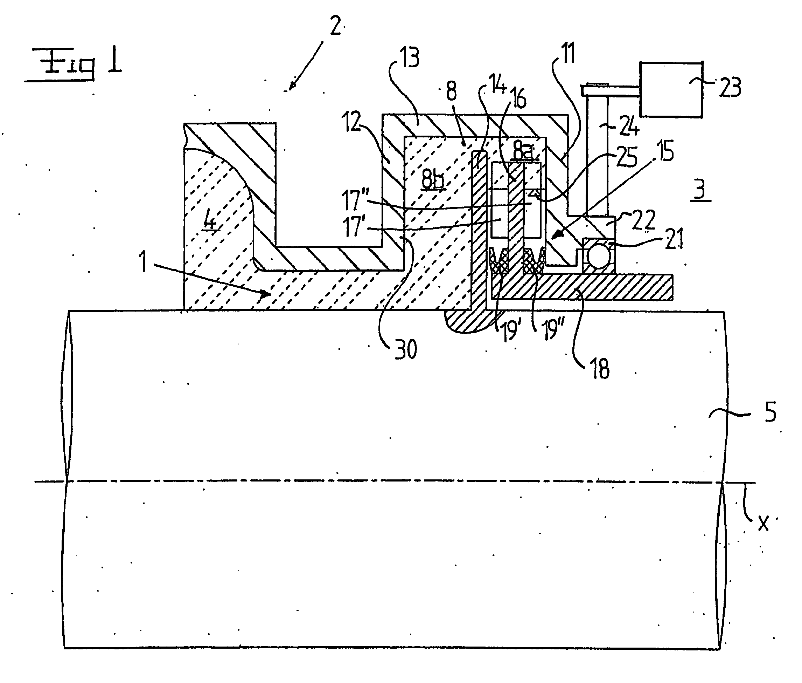

Figs 1, 2, 3, 5 and 7 disclose different embodiments of a device for sealing a passage 1 through a wall 2 between a first space 3, which is arranged to contain a gas, and a second space 4, which is arranged to contain a liquid. The wall 2 may form a stationary wall element of a ship or of a stationary plant. A rotatable shaft 5, for instance a propeller shaft of a ship, extends in the passage 1 through the wall 2 in such a way that a gap is formed, which extends around the shaft 5 between the shaft 5 and the wall 2. The shaft 5 is rotatable around the rotary axis x.

The device according to the invention includes a chamber 8, which is provided between the first space 3 and the second space 4, and more precisely between the first space 3 and said gap of the passage 1. The chamber 8 is annular and extends around the shaft 5. The chamber 8 is formed of a first limiting wall 11, a second limiting wall 12 and a third limiting wall 13. The three limiting walls 11, 12, 13 thus enclose the chamber 8. The first limiting wall 11 and the second limiting wall 12 extend substantially radially outwardly and in parallel to each other. The third limiting wall 13 extends substantially coaxially with the shaft 5 and between a radially outer end of the first limiting wall 11 and a radially outer end of the second limiting wall 12. In the first embodiment, the limiting walls 11, 12, 13 are fixed in relation to the stationary wall 2.

The device also includes a rotatable disc 14, which is fixedly arranged on the shaft 5. The disc 9 extends substantially radially outwardly from the shaft 5 into the chamber 8 and divides the chamber 8 in a first part volume 8a and a second part volume 8b.

Liquid from the second space 4 may thus via the passage 1 and said gap flow from the second space 4 into the chamber 8. Consequently, the chamber 8 will contain liquid. Furthermore, the device includes different means, which are to be explained more closely in connection with the description of various embodiments and which are arranged to prevent liquid from flowing through the chamber 8 to the first space 3 by forcing the liquid in the chamber 8 to rotate at a relatively high rotary speed, i.e. a rotary speed substantially exceeding the rotary speed of the shaft 5. The rotating liquid will thus form a rotating liquid body in the first part volume 8a of the chamber 8 between the disc 14 and the first limiting wall 11.

According to the first embodiment disclosed in Fig 1, said means include a blade member 15, which includes a rotor member in the form of a rotatable disc 16 and two sets of blades 17', 17". The first set of blades 17' are provided on one side of the rotatable disc 16 and the second set of blades 17" are provided on the other side of the rotatable disc 16. The rotatable disc 16 is provided on a cylindrical support member 18 of the blade member 15. The support member 18 is substantially concentrically arranged around the shaft 5 with regard to the rotary axis x. The rotatable disc 16 extends substantially radially outwardly in the chamber 8 from the support member 18 between the disc 14 and the first limiting wall 11 of the chamber 8 .The first set of blades 17' are thus turned towards the disc 14 and the second set of blades 17" are turned towards the first limiting wall 11. The blade member 15 includes also two sealing members 19', 19". A first such sealing member 19' is turned towards the disc 14 and a second sealing member 19" is turned towards the first limiting wall 11. The sealing members 19', 19" are designed in such a way that they do not abut the disc 14 and the first limiting wall 11, respectively, when the blade member 15 rotates, but will abut sealingly the disc 14 and the limiting wall 11, respectively, when the blade member 15 is still standing and liquid flows from the second space 4 towards the first space 3.

The blade member 15 is according to the first embodiment rotatably carried by the shaft 5 by means of a bearing member 21, which is provided between and connected to the cylindrical support member 18 and the stationary wall 2 via a substantially cylindrical projection 22 of the first limiting wall 11. The blade member 15 is rotated independently of the shaft 5 by means of a schematically disclosed drive motor 23, which via a drive belt 24 or any other power transmission member is connected to the cylindrical support member 18. The drive motor 23 is thus arranged to rotate the blade member 15 at a rotary speed which is higher than the rotary speed of the shaft 5, and in such a way create a rotating liquid body in the radially outer part of the chamber 8. The level of the rotating liquid is marked by the arrow 25.

Furthermore, the device is arranged to permit liquid to flow from the chamber 8, and more precisely from the second part volume 8b of the chamber 8, to the second space 4. The second part volume 8b is thus located between the disc 14 and the second limiting wall 12 forming a wall portion 30 extending substantially radially outwardly from the gap mentioned above. The second part volume 8b and the gap thus form an outlet channel, which extends from a radially outer position at the periphery of the disc 14 to a radially inner position in the proximity of the shaft 5.

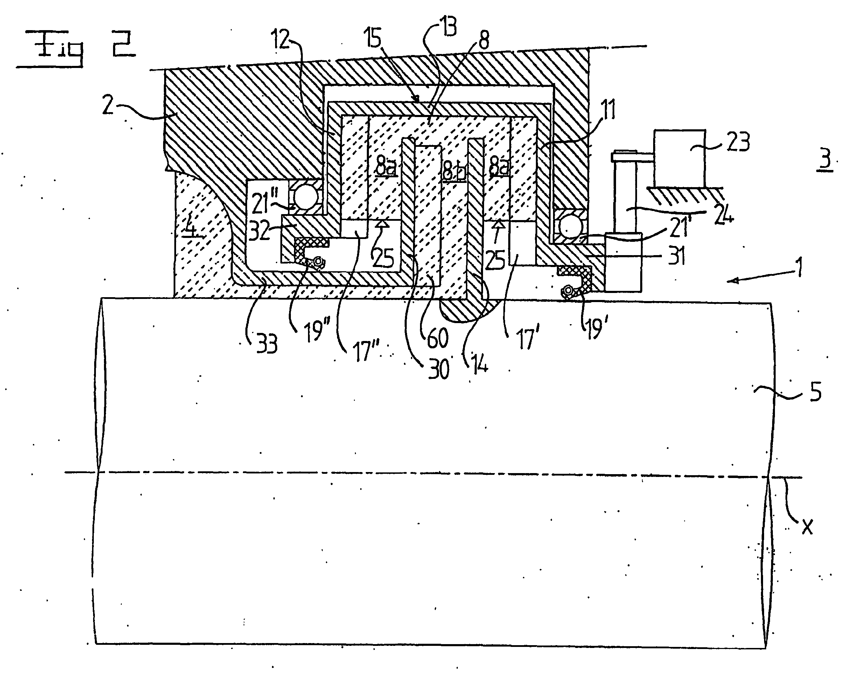

Fig 2 discloses a second embodiment where the blade member 15 forms the chamber 8 which thus is rotatable. It is to be noted that components having substantially the same function have been provided with the same reference signs in the various embodiments. The chamber 8 in the second embodiment thus is formed of a separate wall element 11, 12, 13, which is rotatable around the shaft 5 independently of the rotation of the shaft 5 and which also includes a first limiting wall 11, a second limiting wall 12 and a third limiting wall 13. Also in this embodiment, the limiting walls 11 and 12 extend substantially radially outwardly and in parallel to each other, and the limiting wall 13 extends substantially coaxially with the shaft 5 and between a radially outer end of the limiting walls 11 and 12. The disc 14 extends substantially radially outwardly from the shaft 5 and into the chamber 8. A wall portion 30 extends substantially radially outwardly from said gap and substantially in parallel with the disc 14. The wall portion 30 is rigidly connected to the stationary wall 2. In the second embodiment, the second part volume 8b of the chamber 8 and thus an outlet channel for liquid from the radially outer part of the chamber 8 is formed between the disc 14 and the wall portion 30. In the second embodiment, the first part volume 8a is formed partly between the first limiting wall 11 and the disc 14 and partly between the second limiting wall 12 and the wall portion 30.

According to the second embodiment, the blade member 15 includes a first set of blades 17', which are arranged on the first limiting wall 11 and turned towards the disc 13, and a second set of blades 17", which are arranged on the second limiting wall 12 and turned towards the wall portion 30. The first set of blades 17' and the second set of blades 17" thus create a rotating liquid body in a radially outer part of the respective part volume 8a, so that liquid extends to the level indicated by the arrows 25.

The blade member 15 is according to the second embodiment rotatably carried by the stationary wall 2 by means of a first bearing member 21', which is arranged between and connected to the stationary wall 2 and a substantially cylindrical projection 31 of the first limiting wall 11, and a second bearing member 21", which is arranged between and connected to the stationary wall 2 and a substantially cylindrical projection 32 of the second limiting wall 12. A first sealing member 19' is arranged between the first substantially cylindrical projection 31 and the shaft 5 in such a way that the first sealing member 19' does not abut the shaft 5 when the blade member 15 rotates but only when the blade member 15 is still standing. A second sealing member 19" is arranged between the second substantially cylindrical projection 32 and a substantially cylindrical part 33 of the stationary wall 2. The substantially cylindrical part 33 extends substantially concentrically from the wall portion 30 between the shaft 5 and the projection 32, wherein said gap is formed between the part 33 and the shaft 5. The sealing member 19" does not abut the part 32 when the blade member 15 rotates but only when the blade member 15 is still standing.

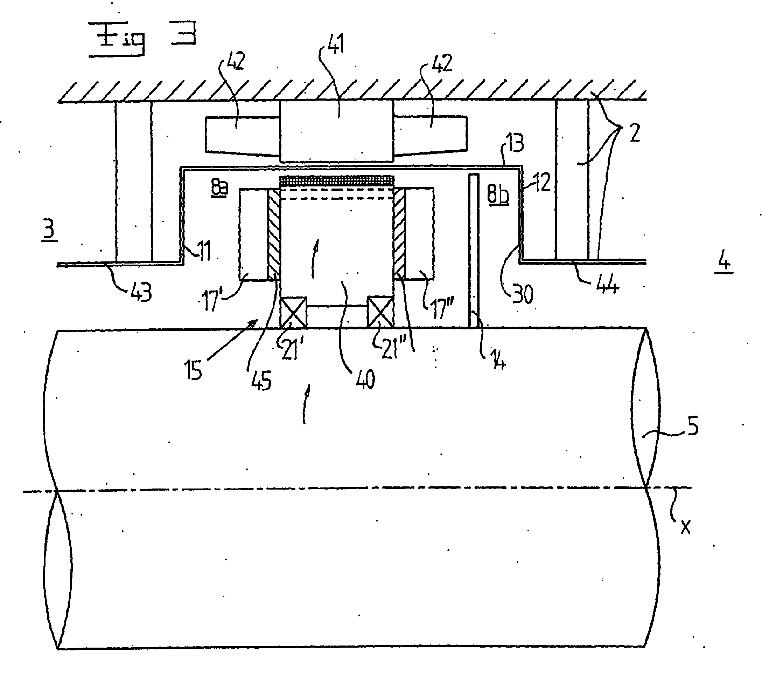

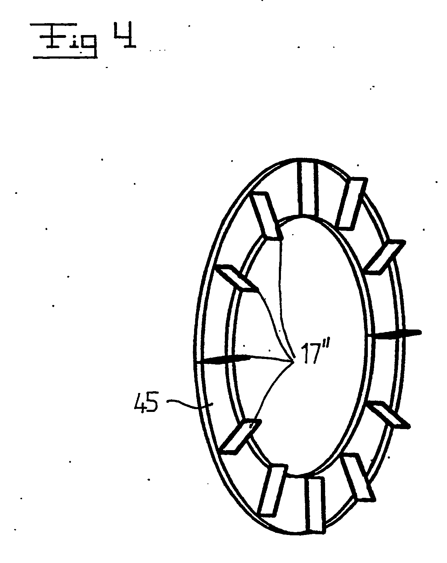

Figs 3 and 4 disclose a third embodiment where the blade member 15 includes an annular rotor 40 of an electric motor. The blade member 10 and the rotor 40 are provided in the chamber 8 and more precisely in the first part volume 8a. Also in this embodiment, the chamber 8 is formed by a first limiting wall 11, a second limiting wall 12 and a third limiting wall 13, which thus enclose the chamber 8. In the same way as in the first embodiment, the three limiting walls 11, 12, 13 are rigidly connected to the stationary wall. The electric motor also includes a stator 41, which has a winding 42 and which is arranged outside the chamber 8, and more precisely outside the first limiting wall 13. The electric motor may for instance be an asynchronous motor or a so-called PMSM-motor. The blade member 15 is rotatably carried by the shaft 5 by means of a first bearing member 21' and a second bearing member 22'. No sealing members are disclosed in Fig 3, but may for instance be arranged between the shaft 5 and the substantially cylindrical projections 43. 44 of the limiting walls 11 and 22, respectively.

The blade member 15 includes a first set of blades 17', which are arranged on the rotor 40 and turned towards the first limiting wall 11, and a second set of blades 17", which are arranged on the rotor 40 and turned towards the disc 14.

Fig 4 discloses schematically an example of a set of blades 17" of the third embodiment. The blades 17" are arranged on an annular carrier 45 which is mounted on the annular rotor 40.

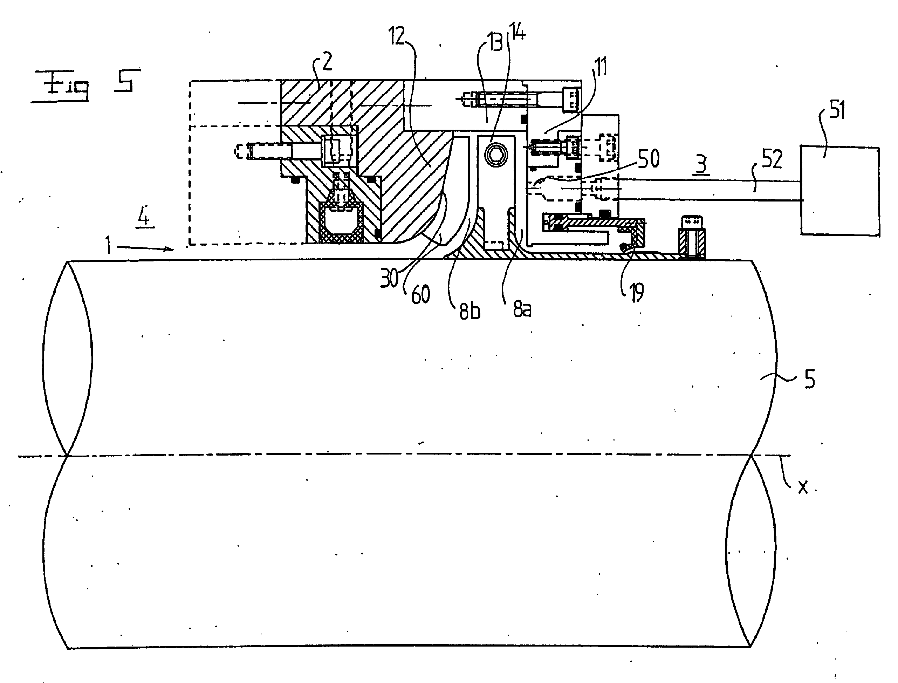

Fig 5 discloses a fourth embodiment of the invention. The chamber 8 is also here formed by a first limiting wall 11. a second limiting wall 12 and a third limiting wall 13. The three limiting walls 11, 12, 13 thus enclose the chamber 8 and are fixedly connected to the stationary wall 2. In this embodiment, said means are arranged to supply liquid to the first part volume 8a of the chamber 8 at such a speed and direction that the liquid in the chamber 8 is forced to rotate at a rotary speed exceeding the rotary speed of the shaft 5. The means include a set of nozzles 50 for said liquid supply. The nozzles 50 extend in a substantially tangential direction into the chamber 8 seen in an axial section. The liquid is supplied to the nozzles 50 by means of a schematically disclosed pump 51 via conduit members 52. A sealing member 19 is arranged between the first limiting wall 11 and the shaft 5.

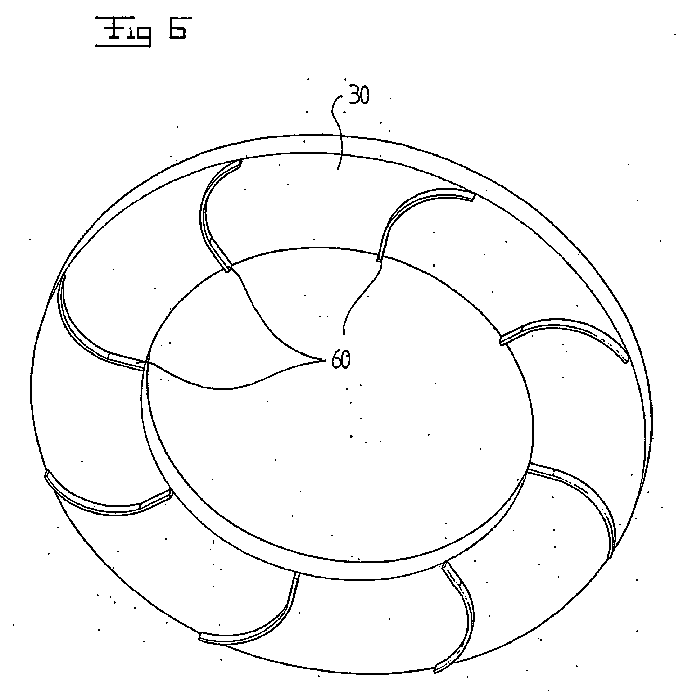

The outlet channel mentioned above, which partly is formed by the second part volume 8b of the embodiments disclosed, is arranged to reduce the speed of the liquid flowing from the chamber 8 to the second space 4. The outlet channel extends from a radially outer position at the periphery of the disc 14 to a radially inner position in the proximity of the shaft 5. By said speed reduction a pressure recovery and thus a lower energy consumption of the device is achieved. In order to further increase the pressure recovery, guide vanes 60 of the type disclosed in Fig 6 may be arranged in the outlet channel for conveying the liquid flowing from the chamber 8 to the second space 8b. In the fourth embodiment, the guide vanes 60 are arranged on the second limiting wall 12, forming a wall portion 30, and in the second embodiment on the wall portion 30. Also the device according to the first and third embodiments may be provided with such guide vanes.

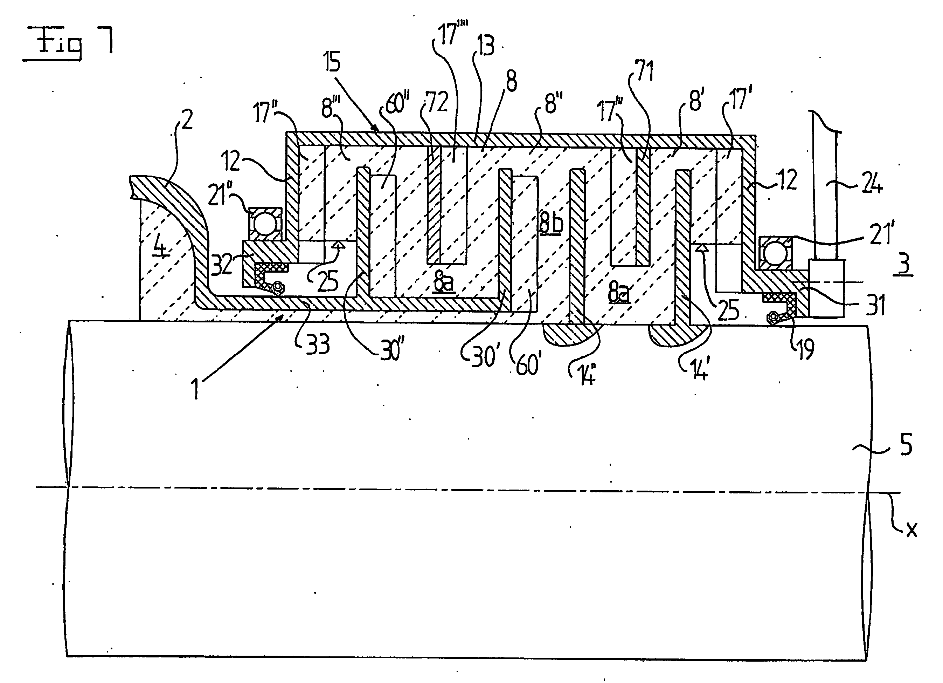

Fig 7 discloses a fifth embodiment, which differs from the other embodiments by the fact that the chamber 8 includes three part chambers 8', 8" and 8"'. Except for this difference, the construction and the function of the device according to the fifth embodiment in Fig 7 is similar to the construction and the function of the second embodiment in Fig 2. The part chambers 8', 8" and 8"' have been formed by means of two intermedient walls 71 and 72, which are provided with blades 17"' and 17"", respectively, and which extend substantially radially inwardly from the third limiting wall 13. Furthermore, the fifth embodiment includes two rotatable discs 14' and 14" which extend into a respective part chamber 8' and 8", respectively, and two wall portions 30' and 30", which are provided with guide vanes 60' and 60", respectively, which correspond to the guide vanes 60 in Fig 2. The wall portions 30' and 30" extend substantially radially outwardly from the cylindrical part 33 and into a respective part chamber 8" and 8''', respectively. The central part chamber 8" includes the second part volume 8b and is thus substantially identical to the chamber in Fig 2, whereas the part chamber 8' merely receives the disc 14' and the part chamber 8"' merely receives the wall portion 30". It is to be noted that the chamber 8 may include another number part chambers than appears from the embodiments disclosed. For instance, it may include the two part chambers 8' and 8", and the two rotatable discs 14' and 14", but merely one wall portion 30'. Also other configurations are possible and especially it is to be noted that the chamber 8 may include more than three part chambers disclosed.

The invention is not limited to the embodiments disclosed but may be varied and modified within the scope of the following claims.

## Claims

1. An assembly comprising a sealing device, a stationary wall (2) and a rotatable shaft (5), wherein the device is adapted for sealing a passage (1) through the stationary wall (2) between a first space (3), which is arranged to contain a gas, and a second space (4),
wherein the rotatable shaft (5) extends in the passage (1) through the wall (2) in such a way that a gap is formed, which extends around the shaft (5) between the shaft and the wall,
wherein the device includes a chamber (8), which is arranged between the gap and the first space (3) and extends around the shaft, and a rotatable disc (14), which is fixedly arranged on the shaft (5) and extends outwardly from the shaft into the chamber (8),
wherein the chamber (8) is arranged to contain liquid, and
wherein the device includes means (15, 60) arranged to force said liquid to rotate in the chamber (8) at a rotary speed which substantially exceeds the rotary speed of the shaft (5),
**characterised in that** the second space is arranged to contain a liquid and **in that** the chamber (8) is arranged to permit a part of said liquid of the second space (4) to flow into the chamber (8), and at least partly to be retained in the chamber (8) for said sealing of the passage.

2. An assembly according to claim 1, **characterised in that** said means (15, 60) are arranged to provide said rotation in the chamber (8) between the disc (14) and the first space (3).

3. An assembly according to claim 2, **characterised in that** said means include a blade member (15) arranged to rotate independently of the shaft (5).

4. An assembly according to claim 3, **characterised in that** said means include a drive member (23, 40, 41) which is arranged to rotate the blade member (15) at a rotary speed which is higher than the rotary speed of the shaft (5).

5. An assembly according to any one of claims 3 and 4,
**characterised in that** the blade member (15) is rotatably carried by a bearing member (21) which is connected to at least one of the shaft (5), the disc (14) and the wall (2).

6. An assembly according to any one of claims 3 to 5,
**characterised in that** the blade member (15) includes at least one set of blades (17',17",17"',17"") which are arranged in the chamber (8).

7. An assembly according to any one of claims 3 to 6,
**characterised in that** the blade member (15) includes a rotor member (16, 40) which extends outwardly in the chamber (8).

8. An assembly according to claim 7, **characterised in that** the blade member (15) includes a first set of blades (17'), which are arranged on the rotor member (16, 40) and turned towards the first space (3), and a second set of blades (17"), which are arranged on the rotor member (16, 40) and turned towards the disc (14).

9. An assembly according to any one of claims 7 and 8,
**characterised in that** the rotor member includes a rotor (40) of an electric motor having a stator (40) which is provided outside the chamber.

10. An assembly according to any one of claims 3 to 6,
**characterised in that** the blade member (15) forms the chamber (8).

11. An assembly according to claim 10, **characterised in that** the blade member includes a first set of blades (17'), which are arranged on a first limiting wall (11) of the chamber (8) and turned towards the disc (13), and a second set of blades (17"), which are arranged on a second limiting wall (12) of the chamber (8) and turned towards the first limiting wall (11).

12. An assembly according to any one of claims 1 and 2,
**characterised in that** said means (60) are arranged to supply liquid to the chamber (8) at such a speed and direction that liquid in the chamber (8) is forced to said rotation.

13. An assembly according to claim 12, **characterised in that** said means includes at least a nozzle (50) for said liquid supply, wherein said nozzle (50) extends in a substantially tangential direction into the chamber (8).

14. An assembly according to any one of claims 12 and 13,
**characterised in that** said means include a pump (51) for providing said liquid supply.

15. An assembly according to any one of the preceding claims,
**characterised in that** the chamber (8) includes several part chambers (8', 8", 8"'), which are arranged between the gap and the first space and extend around the shaft (5), and two rotatable discs (14', 14"), which are rigidly arranged on the shaft (5) and extend outwardly from the shaft into a respective one of said part chambers (8', 8"), wherein each of said part chambers is arranged to contain liquid.

16. An assembly according to claim 15,
**characterised in that** said part chambers (8', 8", 8"') are arranged to permit a part of said liquid to flow into the part chambers and at least partly be retained for said sealing of the passage.

17. An assembly according to any one of the preceding claims,
**characterised in that** the device is arranged to permit liquid to flow from said chamber (8) to the second space (4).

18. An assembly according to any one of the preceding claims,
**characterised in that** the device includes a wall portion (12, 30) which partly defines the chamber (8) and extends outwardly from the gap.

19. An assembly according to claims 17 and 18, **characterised in that** said chamber (8) between the disc and the wall portion (12, 30) forms an outlet channel which is arranged to reduce the speed of the liquid flowing from the chamber (8) to the second space (4).

20. An assembly according to claim 19, **characterised in that** the outlet channel extends from a radially outer position at the periphery of the disc (14) to a radially inner position in the proximity of the shaft (5).

21. An assembly according to any one of claims 19 and 20,
**characterised in that** guide vanes (60) are arranged in the outlet channel for conveying the liquid flowing from the chamber (8) to the second space (4).

22. An assembly according to claim 21, **characterised in that** said guide vanes (60) are arranged on the wall portion (12, 30).

23. An assembly according to any one of claims 19 to 22,
**characterised in that** the wall portion (12, 30) is rigidly connected to the wall (2).

24. A method for sealing a passage (1) through a stationary wall (2) between a first space (3), which contains a gas, and a second space (4), wherein a rotating shaft (5) extends in the passage (1) through the wall (2) in such a way that a gap is formed, which extends around the shaft (5) between the shaft and the wall,
wherein the method includes the steps of:
providing a device including a chamber (8), which is arranged between the gap and the first space (3) and extends around the shaft, and a rotating disc (14), which is rigidly arranged on the shaft (5) and extends outwardly from the shaft into the chamber (8)
wherein the chamber (8) is arranged to contain liquid, and
forcing said liquid in the chamber (8) to rotate at a rotary speed which substantially exceeds the rotary speed of the shaft (5),
**characterised in that** the second space contains a liquid and by the further step of permitting a part of said liquid from the second space (4) to flow into the chamber (8) and at least partly be retained in the chamber (8) for said sealing of the passage.
permitting a part of said liquid from the second space (4) to flow into the chamber (8) and at least partly be retained in the chamber (8) for said sealing of the passage.

## Patentansprüche

1. Anordnung mit einer Abdichtungsvorrichtung, einer feststehenden Wand (2) und einer drehbaren Welle (5), wobei die Vorrichtung zum Abdichten eines Durchganges (1) durch die feststehende Wand (2) zwischen einem ersten Raum (3), der zur Aufnahme von Gas ausgebildet ist, und einem zweiten Raum (4) geeignet ist, wobei sich die drehbare Welle derart in den Durchgang (1) durch die Wand (2) erstreckt, dass ein Spalt gebildet wird, der sich um die Welle (5) zwischen der Welle und der Wand erstreckt, wobei die Vorrichtung eine Kammer (8) besitzt, die zwischen dem Spalt und dem ersten Raum (3) angeordnet ist und sich um die Welle erstreckt, mit einer drehbaren Scheibe (14), die auf der Welle (5) starr angeordnet ist und sich von der Welle nach außen in die Kammer (8) erstreckt, wobei die Kammer (8) zur Aufnahme von Flüssigkeit ausgebildet ist und wobei die Vorrichtung Mittel (15, 60) besitzt, die angeordnet sind, um besagte Flüssigkeit in die Kammer (8) mit einer Drehgeschwindigkeit, die deutlich die Drehgeschwindigkeit der Welle (5) überschreitet, zum Rotieren zu zwingen
**dadurch gekennzeichnet, dass**
der zweite Raum zur Aufnahme von Flüssigkeit ausgebildet ist und, dass die Kammer (8) angeordnet ist um zu ermöglichen, dass ein Teil der genannten Flüssigkeit des zweiten Raumes (4) in die Kammer (8) fließen kann, und
zumindest teilweise für besagtes Abdichten des Durchlasses in der Kammer (8) aufgestaut wird.

2. Anordnung nach Anspruch 1, **dadurch gekennzeichnet, dass** genannte Mittel (15, 60) angeordnet sind, um für besagte Rotation in der Kammer (8) zwischen der Scheibe (14) und dem ersten Raum (3) zu sorgen.

3. Anordnung nach Anspruch 2, **dadurch gekennzeichnet, dass** genannte Mittel ein Flügelelement (15) aufweisen, das derart angeordnet ist, dass sie unabhängig zur Welle (5) rotieren.

4. Anordnung nach Anspruch 3, **dadurch gekennzeichnet, dass** genannte Mittel ein Antriebselement (23, 40, 41) aufweisen, das derart angeordnet ist, dass das Flügelelement (15) mit einer Rotationsgeschwindigkeit rotiert, die größer ist als die Rotationsgeschwindigkeit der Welle (5).

5. Anordnung nach einem der Ansprüche 3 und 4, **dadurch gekennzeichnet, dass** das Flügelelement (15) rotierbar durch ein Halteelement (21) gelagert ist, welches zumindest mit der Welle (5) und/oder der Scheibe (14) und/oder der Wand (2) verbunden ist.

6. Anordnung nach einem der Ansprüche 3 bis 5, **dadurch gekennzeichnet, dass** das Flügelelement (15) mindestens einen Satz von Flügeln (17', 17", 17"', 17"") aufweist, die in der Kammer (8) angeordnet sind.

7. Anordnung nach einem der Ansprüche 3 bis 6, **dadurch gekennzeichnet, dass** das Flügelelement (15) ein Rotorelement (16, 40) aufweist, welches sich nach außen in die Kammer (8) erstreckt.

8. Anordnung nach Anspruch 7, **dadurch gekennzeichnet, dass** das Flügelelement (15) einen ersten Satz von Flügeln (17') aufweist, die auf den Rotorelement (16, 40) angeordnet sind und sich in die Richtung des ersten Raumes (3) erstrecken, sowie einen zweiten Satz Flügel (17"), die auf dem Rotorelement (16, 40) angeordnet sind und sich in die Richtung der Scheibe (14) erstrecken.

9. Anordnung nach einem der Ansprüche 7 und 8, **dadurch gekennzeichnet, dass** das Rotorelement einen Rotor (40) eines elektrischen Motors aufweist, der einen Stator (40) hat, der außerhalb des Raums angeordnet ist.

10. Anordnung nach einem der Ansprüche 3 bis 6, **dadurch gekennzeichnet, dass** das Flügelelement (15) die Kammer (8) ausbildet.

11. Anordnung nach Anspruch 10, **dadurch gekennzeichnet, dass** das Flügelelement einen ersten Satz von Flügeln (17') aufweist, die an einer ersten Begrenzungswand (11) der Kammer (8) angeordnet sind und sich in die Richtung der Scheiben (13) erstrecken, sowie einen zweiten Satz von Flügeln (17"), die an einer zweiten Begrenzungswand (12) der Kammer (8) angeordnet sind und sich in die Richtung der ersten Begrenzungswand (11) erstrecken.

12. Anordnung nach einem der Ansprüche 1 bis 2, **dadurch gekennzeichnet, dass** besagte Mittel (60) angeordnet sind, um in die Kammer (8) die Flüssigkeit mit in eine solchen Geschwindigkeit und Richtung zu versetzen, dass die Flüssigkeit in der Kammer (8) besagte Rotation ausbildet.

13. Anordnung nach Anspruch 12, **dadurch gekennzeichnet, dass** besagte Mittel mindestens eine Düse (50) für besagte Flüssigkeitszufuhr aufweist, wobei sich besagte Düse (50) im Wesentlichen in tangentialer in Richtung in die Kammer (8) erstreckt.

14. Anordnung nach einem der Ansprüche 12 und 13, **dadurch gekennzeichnet, dass** besagte Mittel eine Pumpe (51) für das Bereitstellen der besagten Flüssigzufuhr aufweisen.

15. Anordnung nach einem der vorgenannten Ansprüche, **dadurch gekennzeichnet, dass** die Kammer (8) mehrere Teilräume (8', 8", 8"') aufweist, die zwischen dem Spalt und dem ersten Raum angeordnet sind und sich rund um die Welle (5) erstrecken, sowie zwei drehbare Scheiben (14', 14"), die starr auf der Welle (5) angeordnet sind und sich nach außen von der Welle in einen der besagten und entsprechenden Räume (8', 8") erstrecken, wobei jeder der besagten Teilräume angeordnet ist, um eine Flüssigkeit aufzunehmen.

16. Anordnung nach Anspruch 15, **dadurch gekennzeichnet, dass** besagte Teilräume (8', 8", 8"') angeordnet sind, um zu ermöglichen, dass ein Teil der besagten Flüssigkeit in die Teilräume fließt und zumindest teilweise zurückgehalten wird für das genannte Abdichten des Durchlasses.

17. Anordnung nach einem der vorgenannten Ansprüche, **dadurch gekennzeichnet, dass** die Vorrichtung derart angeordnet ist, dass es möglich ist, dass die Flüssigkeit von besagter Kammer (8) in den zweiten Raum (4) fließt.

18. Anordnung nach einem der vorgenannten Ansprüche, **dadurch gekennzeichnet, dass** die Vorrichtung einen Wandteil (12, 30) aufweist, der teilweise die Kammer (8) begrenzt und sich nach außen von dem Spalt erstreckt.

19. Anordnung nach Anspruch 17 und 18, **dadurch gekennzeichnet, dass** besagte Kammer (8) zwischen der Scheibe und dem Wandteil (12, 30) einen Abflusskanal bildet, der so angeordnet ist, dass die Geschwindigkeit der Flüssigkeit reduziert wird, die von der Kammer (8) zu dem zweiten Raum (4) fliesst.

20. Anordnung nach Anspruch 19, **dadurch gekennzeichnet, dass** sich der Abflusskanal von einer radialen äußeren Position auf der Peripherie der Scheibe (14) zu einer radialen inneren Position in der Nähe der Welle (5) erstreckt.

21. Anordnung nach einem der Ansprüche 19 und 20, **dadurch gekennzeichnet, dass** Leitschaufeln (60) in den Abflusskanal zur Beförderung der Flüssigkeit, die von der Kammer (8) zu dem zweiten Raum (4) fließt, angeordnet sind.

22. Anordnung nach Anspruch 21, **dadurch gekennzeichnet, dass** besagte Leitschaufeln (60) an einer Teilwand (12, 30) angeordnet sind.

23. Anordnung nach einem der Ansprüche 19 bis 22, **dadurch gekennzeichnet, dass** der Wandteil (12, 30) starr mit der Wand (2) verbunden ist.

24. Verfahren zum Abdichten eines Durchganges (1) durch eine stationäre Wand (2) zwischen einem ersten Raum (3), der ein Gas enthält und einem zweiten Raum (4), wobei eine rotierende Welle (5) von dem Durchgang (1) durch die Wand (2) derart erstreckt ist, dass ein kleiner Spalt entsteht, der sich rund um die Welle (5) zwischen dem Schaft und der Wand erstreckt, wobei das Verfahren folgende Schritte umfasst:
Bereitstellen einer Vorrichtung mit einer Kammer (8), die zwischen einem Spalt und einem ersten Raum (3) angeordnet ist und sich rund um die Welle erstreckt, sowie einer rotierenden Scheibe (14), die starr auf der Welle (5) angeordnet ist und sich nach außen von der Welle in die Kammer (8) erstreckt, wobei die Kammer (8) angeordnet ist, um eine Flüssigkeit aufzunehmen, und wobei besagte Flüssigkeit in der Kammer (8) mit einer Rotationsgeschwindigkeit rotiert, die deutlich höher ist als die Rotationsgeschwindigkeit der Welle (5),
**dadurch gekennzeichnet, dass**
der zweite Raum eine Flüssigkeit enthält und in einem weiteren Schritt ein Teil der besagten Flüssigkeit von dem zweiten Raum (4) in die Kammer (8) fließt und zumindest teilweise für besagtes Abdichten des Durchganges in der Kammer (8) zurückgehalten wird.

## Revendications

1. Ensemble comprenant un dispositif d'étanchéité, une paroi fixe (2) et un arbre rotatif (5), dans lequel le dispositif est approprié pour fermer de manière étanche un passage (1) à travers la paroi fixe (2) entre un premier espace (3), qui est agencé de manière à contenir un gaz, et un deuxième espace (4),
dans lequel l'arbre rotatif (5) s'étend dans le passage (1) à travers la paroi (2) de telle manière qu'un intervalle est formé, qui s'étend autour de l'arbre (5) entre l'arbre et la paroi,
dans lequel le dispositif inclut une chambre (8), qui est agencée entre l'intervalle et le premier espace (3) et s'étend autour de l'arbre, et un disque rotatif (14), qui est agencé de manière fixe sur l'arbre (5) et s'étend vers l'extérieur à partir de l'arbre dans la chambre (8),
dans lequel la chambre (8) est agencée de manière à contenir un liquide, et
dans lequel le dispositif inclut un moyen (15, 60) agencé de manière à forcer ledit liquide à être en rotation dans la chambre (8) à une vitesse de rotation qui est substantiellement supérieure à la vitesse de rotation de l'arbre (5),
**caractérisé en ce que** le deuxième espace est agencé de manière à contenir un liquide et **en ce que** la chambre (8) est agencée de manière à permettre à ce qu'une partie dudit liquide du deuxième espace (4) s'écoule dans la chambre (8), et soit au moins partiellement retenu dans la chambre (8) pour ladite fermeture étanche du passage.

2. Ensemble selon la revendication 1, **caractérisé en ce que** ledit moyen (15, 60) est agencé de manière à fournir ladite rotation dans la chambre (8) entre le disque (14) et le premier espace (3).

3. Ensemble selon la revendication 2, **caractérisé en ce que** ledit moyen inclut un élément à ailettes (15) agencé de manière à tourner indépendamment de l'arbre (5).

4. Ensemble selon la revendication 3, **caractérisé en ce que** ledit moyen inclut un élément d'entraînement (23, 40, 41) qui est agencé pour mettre en rotation l'élément à ailettes (15) à une vitesse de rotation qui est supérieure à la vitesse de rotation de l'arbre (5).

5. Ensemble selon l'une quelconque des revendications 3 et 4, **caractérisé en ce que** l'élément à ailettes (15) est porté en rotation par un élément porteur (21) qui est raccordé à au moins l'un de l'arbre (5), du disque (14) et de la paroi (2).

6. Ensemble selon l'une quelconque des revendications 3 à 5, **caractérisé en ce que** l'élément à ailettes (15) inclut au moins un ensemble d'ailettes (17',17",17"',17"") qui sont agencées dans la chambre (8).

7. Ensemble selon l'une quelconque des revendications 3 à 6, **caractérisé en ce que** l'élément à ailettes (15) inclut un élément de rotor (16, 40) qui s'étend vers l'extérieur dans la chambre (8).

8. Ensemble selon la revendication 7, **caractérisé en ce que** l'élément à ailettes (15) inclut un premier ensemble d'ailettes (17'), qui sont agencées sur l'élément de rotor (16, 40) et tournées vers le premier espace (3), et un deuxième ensemble d'ailettes (17"), qui sont agencées sur l'élément de rotor (16, 40) et tournées vers le disque (14).

9. Ensemble selon l'une quelconque des revendications 7 et 8, **caractérisé en ce que** l'élément de rotor inclut un rotor (40) d'un moteur électrique ayant un stator (40) qui est prévu à l'extérieur de la chambre.

10. Ensemble selon l'une quelconque des revendications 3 à 6, **caractérisé en ce que** l'élément à ailettes (15) forme la chambre (8).

11. Ensemble selon la revendication 10, **caractérisé en ce que** l'élément à ailettes inclut un premier ensemble d'ailettes (17'), qui sont agencées sur une première paroi de limitation (11) de la chambre (8) et tournées vers le disque (13), et un deuxième ensemble d'ailettes (17"), qui sont agencées sur une deuxième paroi de limitation (12) de la chambre (8) et tournées vers la première paroi de limitation (11).

12. Ensemble selon l'une quelconque des revendications 1 et 2, **caractérisé en ce que** ledit moyen (60) est agencé de manière à apporter le liquide dans la chambre (8) à une vitesse et selon une direction telles que le liquide dans la chambre (8) est forcé à ladite rotation.

13. Ensemble selon la revendication 12, **caractérisé en ce que** ledit moyen inclut au moins une buse (50) pour l'apport dudit liquide, dans lequel ladite buse (50) s'étend dans une direction substantiellement tangentielle dans la chambre (8).

14. Ensemble selon l'une quelconque des revendications 12 et 13, **caractérisé en ce que** ledit moyen inclut une pompe (51) pour fournir l'apport dudit liquide.

15. Ensemble selon l'une quelconque des revendications précédentes, **caractérisé en ce que** la chambre (8) inclut plusieurs chambres partielles (8', 8", 8"'), qui sont agencées entre l'intervalle et le premier espace et s'étendent autour de l'arbre (5), et deux disques rotatifs (14', 14"), qui sont agencés de façon rigide sur l'arbre (5) et s'étendent vers l'extérieur à partir de l'arbre dans une respective desdites chambres partielles (8', 8"), dans lequel chacune desdites chambres partielles est agencée de manière à contenir un liquide.

16. Ensemble selon la revendication 15, **caractérisé en ce que** lesdites chambres partielles (8', 8", 8"') sont agencées de manière à permettre qu'une partie dudit liquide s'écoule dans les chambres partielles et soit au moins partiellement retenue pour ladite fermeture étanche du passage.

17. Ensemble selon l'une quelconque des revendications précédentes, **caractérisé en ce que** le dispositif est agencé de manière à permettre que le liquide s'écoule de ladite chambre (8) dans le deuxième espace (4).

18. Ensemble selon l'une quelconque des revendications précédentes, **caractérisé en ce que** le dispositif inclut une portion de paroi (12, 30) qui définit partiellement la chambre (8) et s'étend vers l'extérieur à partir de l'intervalle.

19. Ensemble selon les revendications 17 et 18, **caractérisé en ce que** ladite chambre (8) entre le disque et la portion de paroi (12, 30) forme un canal de sortie qui est agencé de manière à réduire la vitesse du liquide s'écoulant de la chambre (8) dans le deuxième espace (4).

20. Ensemble selon la revendication 19, **caractérisé en ce que** ledit canal de sortie s'étend d'une position radialement extérieure à la périphérie du disque (14) jusqu'à une position radialement intérieure à proximité de l'arbre (5).

21. Ensemble selon l'une quelconque des revendications 19 et 20, **caractérisé en ce que** des aubes directrices (60) sont agencées dans le canal de sortie pour transporter le liquide s'écoulant de la chambre (8) dans le deuxième espace (4).

22. Ensemble selon la revendication 21, **caractérisé en ce que** lesdites aubes directrices (60) sont agencées sur la portion de paroi (12, 30).

23. Ensemble selon l'une quelconque des revendications 19 à 22, **caractérisé en ce que** la portion de paroi (12, 30) est raccordée de façon rigide à la paroi (2).

24. Procédé pour fermer de façon étanche un passage (1) à travers une paroi fixe (2) entre un premier espace (3), qui contient un gaz, et un deuxième espace (4), dans lequel un arbre rotatif (5) s'étend dans le passage (1) à travers la paroi (2) de telle manière qu'un intervalle est formé, qui s'étend autour de l'arbre (5) entre l'arbre et la paroi, dans lequel le procédé inclut les étapes consistant à :
fournir un dispositif incluant une chambre (8), qui est agencée entre l'intervalle et le premier espace (3) et s'étend autour de l'arbre, et un disque rotatif (14), qui est agencé de façon rigide sur l'arbre (5) et s'étend vers l'extérieur à partir de l'arbre dans la chambre (8) dans lequel la chambre (8) est agencée de manière à contenir un liquide, et
forcer ledit liquide dans la chambre (8) à tourner à une vitesse de rotation qui est substantiellement supérieure à la vitesse de rotation de l'arbre (5),
**caractérisé en ce que** le deuxième espace contient un liquide et par l'étape supplémentaire de permettre qu'une partie dudit liquide du deuxième espace (4) s'écoule dans la chambre (8) et soit au moins partiellement retenue dans la chambre (8) pour ladite fermeture étanche du passage.
